# EUROPEAN PATENT APPLICATION

(11) **EP 3 628 385 A1**
(43) Date of publication of application: **01.04.2020**
(21) Application number: 18197581.4
(22) Date of filing: 28.09.2018
(51) Int. Cl.: B01D 3/20

(54) **A PERFORATED-TRAY COLUMN AND A METHOD OF REVAMPING THE SAME**

(71) Applicant: CASALE SA, 6900 Lugano (CH)
(72) Inventor: PANZA, Sergio, 22100 Como (IT)
(74) Representative: Zardi, Marco

(57) **Abstract**

A perforated-tray column wherein each tray comprises downcomer pipes (6) for conveying a downwardly flowing liquid (L) to a next tray, wherein the downcomer pipe includes: a first portion (7) extending above the perforated tray, a second portion (8) extending below the perforated tray towards the next perforated tray, and an end guard (9) to prevent a gasous phase from entering the downward pipe.

## Description

### Field of the invention

The invention relates to a perforated tray columm.

### Prior art

The perforated-tray column is a known equipment found in many chemical plants.

The space inside the column is partitioned by a perforated tray assembly to facilitate interaction between two process streams, typically between a downwardly flowing liquid and an ascending gas or vapor. Particularly, the perforated trays enhance heat exchange and mass transfer between the process streams.

The liquid flowing on a tray prior to entering in the downcomer interacts with the upwardly flowing vapor that cross the openings provided in a selected portion of the tray.

In a perforated tray column, the following definitions are commonly adopted:
active area: the active area is the portion of the overall sectional column area where said openings can be provided and where the liquid-vapor contact occurs;
open area: the open area is the portion of the active area where openings are provided (i.e. the open area denotes the total surface of openings);
downcomer area: downcomer area: the downcomer area is the area taken by the downcomers allowing the liquid to be fed from an upper tray to a lower tray and where there is no effective contact between liquid and vapor. An effective contact is achieved in the active area by means of the openings;
overall column surface area: the overall column surface area of a perforated tray column denotes all the sectional area covered by the tray, including the active area and the downcomer area.

Perforated tray columns are used, among others, for the making of absorbers or regenerators in the CO2 removal section of some plants for the synthesis of ammonia.

A technical problem encountered in the design of such columns is to ensure that the downwardly flowing liquid stream has a certain residence time over each tray and is conveyed to the next tray below.

Typically, each perforated tray has a sealing ring around its periphery to avoid liquid bypass and may include one or more baffles to define a liquid path or allow the formation of a liquid level above the tray. A downcomer is provided to collect liquid from a selected location of the tray and convey the liquid to the next tray below.

A common embodiment of the prior art has a single downcomer for each tray. Usually the downcomer is positioned at a side of the perforated tray. Each tray therefore has one side where the liquid is received from above, and an opposite side where the liquid is collected and sent to the next tray. Accordingly, each tray has a downcomer inlet area and a downcomer outlet area, both reducing the available active area. For this reason, the prior art suffer from the drawback of a relatively large portion of the tray area taken by the downcomer inlet area and downcomer outlet area, thus not available as active area.

Generally, the size of the downcomer is dictated by a maximum speed of liquid through the downcomer itself and therefore relatively large downcomers are required. The large size of the downcomers not only reduces the active area but also affects the fluid dynamic of the system. Also the baffles can reduce the active area.

For example a prior art embodiment of single-pass tray has a circular cross section whereonly a central band is available as active area. The remaining left/right segments are occupied by the downcomers and belong to downcomer inlet and outlet area.

Another drawback is that each tray tends to produce a substantially horizontal and laminar liquid flow, from the liquid input side where the liquid is received to the liquid output side where the liquid enters the downcomer directed to the next tray. This liquid flow is in a cross-flow arrangement with the upwardly flowing gas phase. It has been found, however, that this flow regime is not optimal for the required interaction with the gas phase.

### Summary of the invention

The aim of the invention is to overcome the above drawbacks of the prior art perforated-tray columns. Particularly, one aim of the invention is to increase the active area in a perforated tray column. Another aim is to provide a more efficient flow regime.

The aim is reached with a perforated tray columm according to claim 1. Preferred features are recited in the dependent claims.

In the invention, the liquid is transferred form one tray to another via a plurality of downcomer pipes. Each tray has a set of downcomer pipes and each downcomer pipe has an upper inlet section, extending above the tray, and a lower outlet section extending towards the next tray. The lower outlet section terminates with an end guard to prevent ascending gas from entering the downcomer pipe.

A perforated-tray column according to the invention comprises a vessel with a vertical axis and a perforated tray assembly including at least a first perforated tray and a second perforated tray which is next to and below the first perforated tray, and the first perforated tray comprises a plurality of downcomer pipes wherein each downcomer pipe includes:
a first portion (7) extending above the first perforated tray, a second portion (8) extending below the first perforated tray towards the second perforated tray,
where the first portion of downcomer pipe terminates with an inlet section (10) of the downcomer pipe located above the first perforated tray,
where the second portion of downcomer pipe terminates above the second perforated tray with an outlet section (11) and an end guard (9),
the end guard (9) being configured to maintain said outlet section (11) submerged by the liquid flowing through the downcomer pipe.

Some preferred embodiments are described by the dependent claims.

In a particularly preferred embodiment, each downcomer pipe of the first perforated tray is axially aligned with a corresponding downcomer pipe of the second perforated tray. Accordingly, the downcomer pipes of the first perforated tray are substantially piled (stacked) with the downcomer pipes of the second perforated tray.

In the preferred embodiments the downcomer pipes are vertical pipes and are vertically aligned, i.e. each downcomer pipe of the first perforated tray share a common vertical axis with a corresponding downcomer pipe of the second perforated tray.

Preferably, the second portions of downcomer pipes of the first tray terminates above the second perforated tray at a distance from the second perforated tray which is greater than the height of first portions of downcomer pipes of the second tray.

The second portions of the downcomer pipes are substantially hanged to the first perforated tray. The bottom end of the downcomer pipes is above the second perforated tray and preferably also above the inlet of the next set of downcomer pipes. This arrangement of downcomer pipes does not require a downcomer inlet area because a perforated tray receives the liquid falling down from above without requiring a downcomer inlet area (i.e. liquid receiving area) in the receiving tray.

Accordingly, a first advantage of the invention is the active area can be increased compared to the prior art.

A second advantage of the invention is that the liquid is conveyed through a plurality of downcomer pipes instead of a large single downcomer. Accordingly, each tray receives the liquid at multiple points and the liquid is distributed more uniformly over the tray. This is also due to the availability of a large active area when the downcomer pipes can be distributed. Each downcomer pipe can be regarded as a liquid transfer means between trays and, therefore, the provision of several downcomers distributed over a larger area provides a more uniform liquid transfer compared to the prior art.

A third advantage is that the distribution of liquid through several downcomer pipes facilitates a turbulent flow of liquid over the surface of the perforated trays, improving the contact, heat exchange and mass transfer with the gasous phase. This effect is further improved by arranging the downcomer pipes regularly spaced with a square or triangular pitch. The need of baffles is reduced and still more active surface can be obtained on the trays.

The applicant has also found that several relatively small downcomer pipes can convey the liquid in an efficient manner while increasing the active area of the trays.

Still another advantage of the invention is that the inlet section of the downcomer pipes can be at a significant height above the surface of the perforated tray; consequently the liquid level over the trays (weir height) can be greater than the prior art, providing longer contacting time and higher tray efficiency.

Preferably, a perforated tray columm according to the invention is fed with a liquid stream (liquid phase) and a gaseous stream (gas phase), wherein the liquid stream flows downward through the colum and the gaseous stram flows upward, in counter-current with the liquid stream.

Preferably, the perforated trays are perpendicular to the vertical axis of the reactor.

Preferably, each downcomer pipe is a vertical straight pipe. More preferably, each downcomer is a vertical straight pipe with a circular cross section.

The inlet section of the downcomer pipe is preferably of 300 mm to 2.5 m above the upper surface of the first perforated tray. The corresponding volume above the first perforated tray, therefore, can be filled with liquid, thus forming a substantial volume of liquid which is traversed by the upwardly flowing gaseous phase. The so obtained liquid height above the trays is substantially greater than the liquid height that can be reached by the prior art. A related advantage is an increase efficiency of the perforated tray assembly in terms of interaction between the liquid phase and the gas phase.

In a preferred embodiment the downcomer pipes are regularly distributed with a square or triangular pitch over at least a portion of the surface of the trays.

The total cross-sectional area of said downcomer pipes is preferably in the range 4% to 30% of the overall column surface area. The cross-sectional area of each individual downcomer pipe is preferably in the range 0.4% to 10% of the overall column surface area (as above defined).

The end guard (9) has preferably a bottom surface (12) below the outlet section (11) and a perimetral wall (13) extending around the outlet section, from said bottom surface (12) to an upper edge (14) above the outlet section (11). Said perimetral wall is preferably a cylindrical wall.

A colum according to the invention, in a preferred application, is an absorber or regenerator of a CO2 removal section of a plant for the synthesis of ammonia. A CO2 removal can be performed, for example, on a make-up gas for the synthesis of ammonia, which is obtained by reforming of a hydrocarbon. CO2 is produced in the shift reaction of CO and must be removed before the conversion, because CO2 damages the catalyst for the synthesis of ammonia. A known technique from removing CO2 from the makeup gas includes the absorption of CO2 in a suitable medium and subsequent regeneration of the medium. These steps are performed in an absorber and a regenerator which can be embodied as perforated tray vessels.

The number of perforated trays in the perforated tray assembly ranges typically from 3 to 9 Preferably the trays are uniformly spaced in the vertical direction.

Accordingly, the invention includes a perforated-tray column for the interaction of a downwardly flowing liquid with an ascending gasous stream, the column comprising a vessel with a vertical axis and a perforated tray assembly including a plurality of perforated trays, wherein each perforated tray of said plurality comprises a plurality of downcomer pipes wherein each downcomer pipe includes:
a first portion (7) extending above the first perforated tray, a second portion (8) extending below the first perforated tray towards the second perforated tray, being this second portion hanged to the above tray and without requiring an inlet downcomer area to the lower tray,
where the first portion of downcomer pipe terminates with an inlet section (10) of the downcomer pipe located above the first perforated tray,
where the second portion of downcomer pipe terminates above the second perforated tray with an outlet section (11) and an end guard (9),
the end guard (9) being then configured to maintain said outlet section (11) submerged by the liquid flowing through the downcomer pipe.

Each perforated tray (lower tray) receiving a downwards flowing liquid from an above perforated tray (upper tray) has preferably no downcomer inlet area; the liquid is received in the form of a falling liquid from the downcomer pipes hanged to the upper perforated tray.

An aspect of the invention is also a revamping of a column. The method includes removing the original assembly and installing a new perforated tray assembly wherein the new assembly has an arrangement of perforated trays and downcomer pipes is in accordance with at least one of the above disclosed preferred embodiments.

The advantages of the invention will emerge even more clearly with the aid of the detailed description below relating to a preferred embodiment.

### Description of the figures

Fig. 1 is a scheme of a perforated tray column according to an embodiment of the invention.
Fig. 2 is a cross section of the bottom end of a downcomer pipe of the perforated tray assembly of the colum of Fig. 1, in a preferred embodiment.
Fig. 3 is a cross section of a plate.
Fig.4 is a comparison between the new configuration based on multi tray pipe and a standard configuration based on single pass tray.

### Detailed description

A perforated tray columm has a pressure vessel 1 with a vertical axis A-A and includes a perforated tray assembly 2 for contacting a downwardly flowing liquid L with an ascending gas phase G.

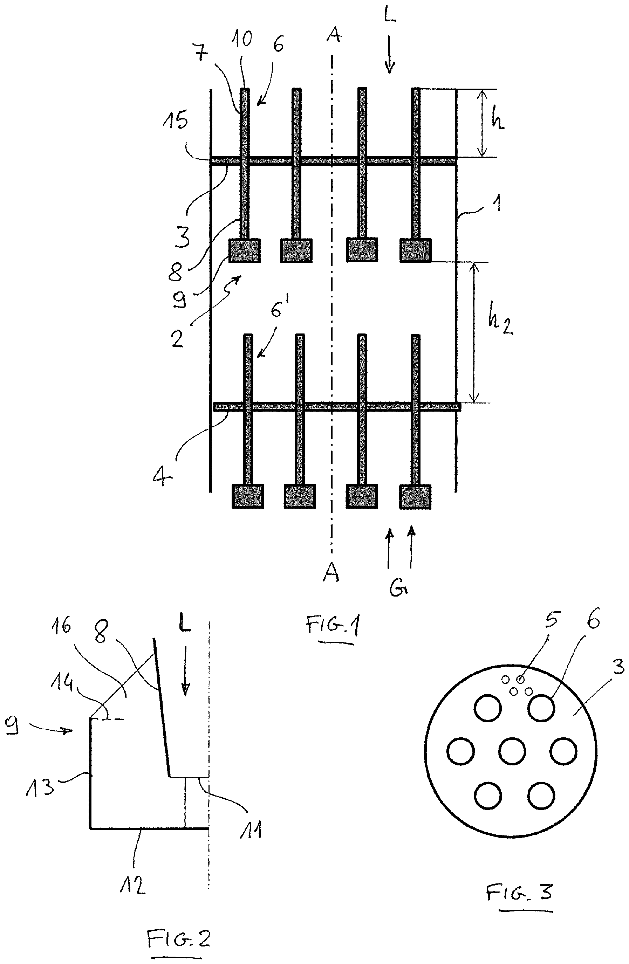

The perforated tray assembly 2 comprises a plurality of perforated trays, regularly spaced inside the vessel 1. Fig. 1 illustrates a pair of trays including a first perforated tray 3 and a second perforated tray 4. The second tray 4 is located next to and below the first perforated tray 3. Both trays 3, 4 have a plurality of holes 5 (visible in Fig. 3). Preferably all trays are identical in shape and size.

The first perforated tray 3 comprises a plurality of downcomer pipes 6 to convey the liquid L to the below tray 4.

Each downcomer pipe 6 includes a first portion (upper portion) 7 extending above the first perforated tray 3, a second portion (lower portion) 8 extending below the first perforated tray 3 towards the second perforated tray 4, and a bottom guard end 9.

The upper portion 7 terminates with an inlet section 10 of the downcomer pipe 6. Said inlet section is located at a height h above the first perforated tray 3.

Thanks to the elongate shape of the downcomer pipes 6, the height h can be significantly greater than prior art columns, for example more than 300 mm and preferably in the range of 300 mm to 2.5 meters. Preferably the inlet sections 10 of all pipes 6 are at the same height above the tray 3.

The lower portion 8 terminates with an outlet section 11 which is above the second perforated tray 4. The outlet section 11 is within a guard end 9 (Fig. 2).

This lower portion 8 is not requiring any part of the lower perforated tray area to provide an inlet downcomer area because the liquid is fed to the below tray just falling from the above tray.

The lower portion 8 ends at a distance height ***h2*** from the lower tray, where ***h2*** is greater than ***h*.** Accordingly, the lower portion 8 remains above the downcomers of the next tray.

The guard end 9 is also above the second perforated tray 4. Said guard end 9 has a bottom surface 12 below the outlet section 11 and a perimetral wall 13 extending around and above the outlet section 11, from the bottom surface 12 to an upper edge 14. Said upper edge 14 of the perimetral wall 13 is above the outlet section 11. Preferably the wall 13 is cylindrical.

The guard end 9 is then configured as a container around the outlet section 11, which is adapted to maintain the outlet section 11 submerged by the liquid L. When the liquid L reaches the upper edge 14, it overflows towards the second perforated tray 4. It can be understood that the guard end 9 acts as hydraulic guard to prevent the ascending gas G from entering the pipe 8. The gas G, on the contrary, bubbles through the holes 5 and mixes with the liquid L above the tray 3.

The first tray 3 has a peripheral seal 15 so that the liquid can only flow downward through the downcomer pipes 6. Each downcomer pipe 6 has no inlet other than the upper inlet section 10.

Fig. 2 shows an embodiment of the end guard 9 fixed to the bottom of the pipe 6. The figure shows an embodiment where the terminal part of the tube 8 is conical and the end guard 9 is anchored by metal sheets 16, to keep the bottom 12 below the outlet section 11. In use, the liquid L overflows from the level indicated by the edge line 14 (upper edge of the wall 13).

Fig. 3 illustrates an example of the arrangement of several downcomer pipes 6. The downcomer pipes are preferably distributed over the entire surface of the tray, or at least over a portion thereof. Fig. 3 refers to the plate 3; the plate 4 is similar.

The second perforated tray 4 has a respective set of downcomer pipes 6' to convey the liquid L to another perforated tray below the tray 4. The downcomer pipes 6' can be realized in accordance with the above described downcomer pipes 6 of the first tray 3. Particularly, the second tray 4 has the same above-tray height ***h*** of pipes 6' as the first tray 3.

Preferably the upper inlet section of the downcomer pipes 6' of the second tray 4 is below the bottom of the end guards 9 of the downcomer pipes 6 of the first tray 3, as illustrated in Fig. 1 with a piled configuration. Accordingly, and in more general terms, a free space exists between the lower ends of downcomer pipes of one tray and the inlets of the downcomer ends of the next tray.

Fig. 1 illustrates a preferred embodiment with stacked downcomer pipes. Each downcomer pipe 6 of the first tray 3 is vertically aligned with a corresponding downcomer pipe 6' of the second tray 4. Pairs of aligned downcomer pipes 6 and 6' have the same axis.

It can be understood that the figures show only two trays 3, 4 but in most cases the assembly 2 will include several trays, each tray having a set of downcomer pipes, embodied as the pipes 6 above described, to convey the liquid L to the next tray. Preferably, all downcomer pipes are axially aligned as disclosed above.

In operation, the liquid L covers the surface of the first tray 3 and accumulates above the tray 3 until it reaches the inlet sections 10 of the downcomer pipes 6. From here, the liquid L flows through the pipes 6, fills the bottom end guards 9 and overflows from the edges 14 over the underlying tray 4. In the same time, the bubbles of gas G contacts the liquid passing through the holes 5. An efficient heat and mass transfer is therefore achieved.

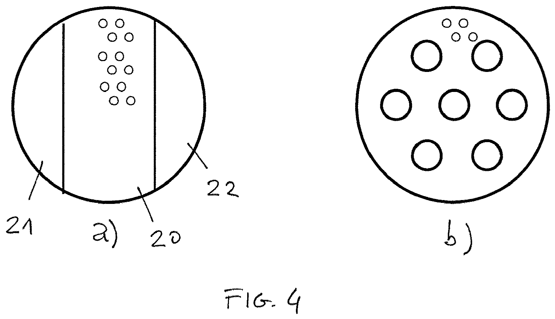

Fig. 4 illustrates a comparison between a) a prior art single pass tray and b) a tray according to an embodiment of the invention.

In the prior art of Fig. 4 (a), only a central band 20 of the perforated tray is available as active area, the remaining sectors 21, 22 being taken by the downcomers. Particularly, one sector (e.g. sector 21) is the downcomer outlet area and the other sector is the downcomer inlet area. Both reduce the active area.

The invention, as illustrated in Fig. 4 (b), does not require a downcomer inlet area and therefore increases the active area. Also, the liquid transfer is better distributed over the tray due to the arrangement of the multiple downcomer pipes.

### Example

In the following example (see figure 4) taken from an industrial application, the downcomer area must be designed in order to allow a liquid speed of 0.18 m/s (liquid flow rate 570 m³/h), while the overall sectional area is 11.3 m2 (cylindrical column diameter 3.8 m).

A comparison is developed between a standard configuration with a single tray pass and a configuration according to an embodiment of the present invention based on 7 downcomer circular pipes having 400 mm diameter.

| | Standard configuration | New configuration |
|---|---|---|
| Overal sectional area [m²] | 11.3 | 11.3 |
| Downcomer inlet area [m²] | 0.88 | - |
| Downcomer outlet area [m²] | 0.88 | 0.88 |
| Active area [m²] | 9.7 | 10.6 |

From the above table is evident that the new configuration makes available a greater active area for the vapour decreasing the possibility of flooding issue in the column.

In another perspective, in case of a new tower, the application of the new configuration based on multi stacked pipe hanged to the above trays, allows the design of a tower having a diameter of the column smaller than that of a column with trays based on a standard configuration.

## Claims

1. A perforated-tray column for the interaction of a downwardly flowing liquid (L) with an ascending gasous stream (G), the column comprising a vessel (1) with a vertical axis and a perforated tray assembly (2) including at least a first perforated tray (3) and a second perforated tray (4) which is next to and below the first perforated tray, and the first perforated tray comprises a plurality of downcomer pipes (6) wherein each downcomer pipe includes:
a first portion (7) extending above the first perforated tray, a second portion (8) extending below the first perforated tray towards the second perforated tray,
where the first portion of downcomer pipe terminates with an inlet section (10) of the downcomer pipe located above the first perforated tray,
where the second portion of downcomer pipe terminates above the second perforated tray with an outlet section (11) and an end guard (9),
said end guard (9) configured to maintain said outlet section (11) submerged by the liquid flowing through the downcomer pipe.

2. A column according to claim 1 wherein each downcomer pipe associated to a first tray is axially aligned with a corresponding downcomer pipe associated to a second tray.

3. A column according to claim 1 or 2 wherein the second portion (8) of downcomer pipes (6) of the first tray (3) terminates above the second perforated tray (4) at a distance (***h2***) from the second perforated tray which is greater than the height (***h***) of first portions of downcomer pipes (6') of the second tray (4).

4. A column according to claim 1 or 2 wherein the inlet section (10) of each downcomer pipe (6) is at a height of 300 mm to 2.5 m above the upper surface of the first perforated tray (3).

5. A column according any of the previous claims, wherein the first perforated tray and second perforated tray are perpendicular to the vertical axis of the vessel.

6. A column according to any of the previous claims wherein each downcomer pipe is a vertical straight pipe.

7. A column according to any of the previous claims wherein the downcomer pipes are regularly distributed with a square or triangular pitch over at least a portion of the surface of the first tray.

8. A column according to any of the previous claims, wherein the cross-sectional area of said downcomer pipes is in the range 4% to 30% of the surface area of the first perforated tray.

9. A column according to any of the previous claims, wherein the end guard (9) comprises a chamber around the outlet section (11) and said chamber, filled of liquid, acts as a hydraulic guard preventing a gaseous flow directed upward from entering the downcomer pipe through the outlet section (11).

10. A column according to claim 9 where the end guard (9) has a bottom surface (12) below the outlet section (11) and a perimetral wall (13) extending around the outlet section, from said bottom surface (12) to an upper edge (14) above the outlet section (11), to define said chamber.

11. A column according to any of the previous claims, wherein the downcomer pipe has no liquid inlet or outlet other than said inlet section and outlet section.

12. A column according to any of the previous claims, wherein said perforated tray assembly (2) comprises a plurality of perforated trays and each perforated tray of said plurality has a plurality of said downcomer pipes (6, 6') for conveying liquid to a next tray.

13. A column according to claim 12, wherein each perforated tray which receives a downwards flowing liquid from an above perforated tray, has no downcomer inlet area and the liquid is received from downcomer pipes hanging from the above perforated tray.

14. A column according to any of the previous claims, wherein the column is an absorber of a regenerator in a CO2-removal section of a plant for the synthesis of ammonia.

15. A method for revamping a perforated tray column, particularly an absorber or a regenerator of a CO2 removal section of an ammonia plant, wherein the method comprises removing a perforated tray assembly from the column and installing a new perforated tray assembly in the column, wherein:
the new perforated tray assembly comprises at least a first perforated tray and a second perforated tray which is next to and below the first perforated tray, and the first perforated tray comprises a plurality of downcomer pipes wherein each downcomer pipe includes:
a first portion extending above the first perforated tray, a second portion extending below the first perforated tray towards the second perforated tray, and an end guard;
where the first portion of downcomer pipe terminates with an inlet section of the downcomer pipe above the first perforated tray,
where the second portion of downcomer pipe terminates above the second perforated tray with an outlet section and an end guard,
the end guard being configured to maintain said outlet section submerged by the liquid flowing through the downcomer pipe.
